# FASCICULE DE BREVET EUROPEEN

(11) **EP 2 003 004 B1**
(45) Date de publication et mention de la délivrance du brevet: **18.08.2010**
(21) Numéro de dépôt: 08157696.9
(22) Date de dépôt: 05.06.2008
(51) Int. Cl.: B60J 1/20, B60R 5/04, B60J 7/00

(54) **Store à enrouleur pour véhicule automobile à barre de maintien galbée, et véhicule automobile correspondant.**
Rollo für Kraftfahrzeug mit abgerundeter Rückhaltestange und entsprechendes Kraftfahrzeug
Roller blind for an automobile, with curved supporting bar and corresponding automobile vehicle.

(30) Priorité: 15.06.2007 FR 0755804
(43) Date de publication de la demande: 17.12.2008
(73) Titulaire: Advanced Comfort Systems France - ACS France, 79300 Bressuire (FR)
(72) Inventeur: Muller, Nicolas, 67210, OBERNAI (FR)
(74) Mandataire: Bioret, Ludovic

(56) Documents cités:
- EP-A- 1 566 295
- EP-A- 1 769 958

## Description

Le domaine de l'invention est celui des véhicules automobiles, et notamment des véhicules présentant une surface vitrée importante, par exemple au niveau du pavillon. Plus précisément, l'invention concerne l'occultation de telles surfaces vitrées, notamment pour se protéger des rayons du soleil.

La tendance actuelle, en matière de véhicule automobile, est de proposer de plus en plus de surfaces vitrées. Ainsi, notamment, on a proposé des véhicules présentant un pavillon équipé d'un ou plusieurs éléments vitrés. Dans certains cas, l'intégralité du pavillon est en verre ou en un matériau similaire laissant passer les rayons du soleil.

On a également proposé des surfaces vitrées multiples, par exemple sous la forme de deux ou trois éléments, dont certains peuvent former toits ouvrants. De la même façon, des surfaces vitrées importantes peuvent être prévues sur d'autres parties du véhicule, et par exemple à l'arrière, notamment lorsque le véhicule est équipé d'un hayon.

On comprend qu'il est alors nécessaire de prévoir des moyens d'occultation, en particulier pour protéger l'habitacle et ses occupants du soleil.

On prévoit donc généralement d'équiper le véhicule d'un store à enrouleur, comprenant un tube à enrouleur sur lequel est monté une toile d'occultation pouvant prendre une position repliée, enroulée sur le tube à enrouleur, dans laquelle la surface vitrée est non occultée, et une position déployée, dans laquelle la toile d'occultation s'étend sensiblement parallèlement à la surface à occulter. Des positions d'occultation intermédiaires sont bien sûr possibles, la toile étant alors partiellement enroulée sur le tube.

Pour assurer le maintien de la toile déployée dans la position souhaitée, on utilise généralement une ou plusieurs barres de maintien, ou baleines, s'étendant transversalement (c'est-à-dire parallèlement à l'axe du tube à enrouleur). Ces baleines peuvent par exemple être formées d'une tige, ou barre, métallique, solidarisée à la toile.

Un inconvénient de ces baleines est qu'elles ont tendance à détériorer la toile, lorsqu'elle est enroulée, ou à tout le moins marquer celle-ci. Ces marques deviennent apparentes et inesthétiques lorsque la toile est déployée.

Une solution particulière à cette technique a été développée par le Déposant de la présente demande, et est décrite notamment dans le document de brevet EP-1 566 295. Selon cette technique, on équipe la baleine d'une enveloppe de continuité d'appui, présentant deux ailes, réparties de part et d'autre de la baleine, et dont l'épaisseur diminue progressivement en s'approchant des extrémités, de façon que dans la position repliée, la toile d'occultation prenne appui sur ces ailes. Celles-ci, définissant une portion de cylindre, assurent une continuité d'appui pour la toile d'occultation, ce qui permet d'éviter le marquage.

En outre, on supprime ainsi l'effet "balourd", généralement introduit par les baleines, lors de la rotation du tube à enrouleur.

Cette approche est bien adaptée au cas des baleines rectilignes. Cependant, la plupart des pavillons actuels présentent un galbe plus ou moins prononcé, qui suppose que la ou les baleines soient galbées. En d'autres termes, la toile d'occultation, dans sa position déployée, ne doit pas s'étendre de façon rectiligne, dans le sens de la largeur du véhicule, mais prendre au contraire une forme galbée, suivant la forme et le galbe du pavillon.

Différentes solutions ont été proposées pour obtenir ce résultat. Une solution simple est de préformer les baleines, ou barres de maintien, pour qu'elles présentent, dès l'origine, ce galbe, qu'elles impriment alors naturellement à la toile d'occultation, lorsqu'elle est déployée. Cependant, de telles barres de maintien galbées posent des problèmes évidents dans la position repliée. La forme galbée génère des plis, même en présence d'une enveloppe présentant deux ailes, telle que décrite précédemment.

Diverses solutions ont déjà été envisagées, telles que l'utilisation de matériau à mémoire de forme, pouvant s'aplatir dans leur position enroulée, associé à des rails à écartement variable. Cette solution est cependant relativement complexe, et n'est pas adaptée à tous les véhicules.

Le document EP 1 769 958 A décrit un store à enrouleur et un véhicule selon les préambules des revendications 1 et 11.

L'invention a notamment pour objectif de pallier ces inconvénients de l'art antérieur.

Plus précisément, l'invention a pour objectif de fournir un store à enrouleur pour véhicule automobile mettant en oeuvre une ou plusieurs baleines galbées, qui suppriment, ou à tout le moins réduisent la présence de plis lorsque la toile est enroulée.

Un autre objectif de l'invention est de fournir, au moins dans certains de ses modes de réalisation, un tel store à enrouleur, présentant une bonne résistance aux conditions d'ensoleillement extrêmes, notamment en position enroulée.

L'invention a également pour objectif de fournir une telle technique, qui soit aisée à mettre en oeuvre et peu coûteuse.

L'invention a également pour objectif, dans certains de ses modes de réalisation, de fournir un tel store à enrouleur, qui puisse être réalisé à partir de stores, ou d'éléments de store, déjà disponibles.

Ces objectifs, ainsi que d'autres qui apparaîtront plus clairement par la suite, sont atteints à l'aide d'un store à enrouleur pour véhicule automobile, comprenant une toile d'occultation mobile entre au moins deux positions, une position repliée dans laquelle ladite toile est enroulée autour d'au moins un tube enrouleur, et une position déployée, dans laquelle ladite toile est maintenue galbée par au moins une barre de maintien galbée s'étendant parallèlement audit tube à enrouleur.

Selon l'invention, ladite barre de maintien galbée, ou au moins une desdites barres de maintien galbées, porte au moins un élément de compensation de galbe, présentant une section variable et s'étendant au moins sur une portion de ladite barre de maintien galbée, ladite section variable étant définie de façon à former une surface d'appui de ladite toile d'occultation dans ladite position repliée s'étendant sensiblement parallèlement à l'axe dudit tube à enrouleur.

Ainsi, malgré la présence d'une baleine galbée, permettant d'obtenir une toile galbée lorsqu'elle est déployée, l'enroulement de la toile se fait correctement et efficacement, chaque tour de toile prenant appui sur une surface essentiellement cylindrique, définie par le tour de toile précédent et/ou la surface d'appui introduite grâce aux éléments de compensation.

Selon une mise en oeuvre particulière, au moins un desdits éléments de compensation est clippé et/ou collé sur ladite barre de maintien galbée.

Le montage est ainsi simple à mettre à en oeuvre.

Selon un autre mode de réalisation, lesdits éléments de compensation sont solidarisés à une pièce de liaison intermédiaire clippée et/ou collée sur ladite barre de maintien galbée.

Selon encore un autre mode de réalisation, lesdits éléments de compensation sont surmoulés sur une pièce de liaison intermédiaire clippée et/ou collée sur ladite barre de maintien galbée.

Ces deux dernières approches permettent notamment de réutiliser des structures existantes.

Selon une première approche de l'invention, chacune desdites barres de maintien galbées porte deux éléments de compensation symétriques, associés respectivement à chaque extrémité de ladite barre de maintien galbée.

Selon une seconde approche de l'invention, chacune desdites barres de maintien galbées porte un unique élément de compensation s'étendant sensiblement sur toute la longueur de ladite barre de maintien galbée.

Différents matériaux peuvent être utilisés pour la fabrication desdits éléments de compensation. Ils peuvent par exemple être réalisés en TPE.

Selon une caractéristique particulière de l'invention, la surface d'au moins un desdits éléments de compensation présente au moins une diminution locale.

Ceci peut notamment permettre le passage d'un guide toile.

Selon un autre aspect particulier de l'invention, ledit tube enrouleur est logé dans un boîtier portant des moyens de déplaquage lissant ladite toile d'occultation avant son enroulement sur ledit tube à enrouleur.

Lesdits moyens de déplaquage peuvent notamment comprendre au moins une brosse balayant la surface de ladite toile d'occultation.

L'invention concerne également les véhicules automobiles comprenant un store à enrouleur tel que décrit ci-dessus.

Dans un tel véhicule, ledit store peut notamment occulter, dans ladite position déployée, au moins une portion d'un pavillon vitré.

D'autres caractéristiques et avantages de l'invention apparaîtront plus clairement à la lecture de la description suivante de modes de réalisation particuliers, donnés à titre de simples exemples illustratifs et non limitatifs, et des dessins annexes parmi lesquels :
- la figure 1 illustre un store à enrouleur selon l'invention, équipé d'une baleine galbée ;
- la figure 2 illustre un mode de montage de la baleine sur la toile du store de la figure 1 ;
- la figure 3 présente, en coupe, la baleine galbée de la figure 1, équipée des moyens de compensation selon l'invention ;
- la figure 4 présente schématiquement, en coupe, la toile du store de la figure 1, en position enroulée autour du tube à enrouleur ;
- la figure 5 est un exemple de réalisation d'un élément de compensation selon la figure 2 ;
- les figures 6A et 6B présentent une section de l'élément de compensation de la figure 5, en deux emplacements distincts;
- les figures 7A et 7B illustrent un deuxième mode de réalisation de l'invention, selon lequel l'élément de compensation est réalisé par surmoulage :
   o figure 7A : vue de profil;
   o figure 7B : vue de face;
- la figure 8 présente un troisième mode de réalisation, dans lequel la baleine porte une pièce intermédiaire de liaison ;
- la figure 9 illustre la baleine de la figure 7, équipée d'une enveloppe de compensation ;
- la figure 10 présente une variante d'un élément de compensation selon l'invention, adapté au passage de la baleine sous un guide toile.

Sur ces différentes figures, les échelles ne sont pas systématiquement respectées. Au contraire, pour simplifier la compréhension de l'invention, on a volontairement, la plupart du temps, exagéré le galbe de la barre de maintien et de la toile.

L'invention s'applique donc aux stores à enrouleur de grande dimension, par exemple pour des pavillons vitrés, et devant prendre une forme galbée lorsqu'ils sont déployés, par exemple pour suivre le galbe du pavillon.

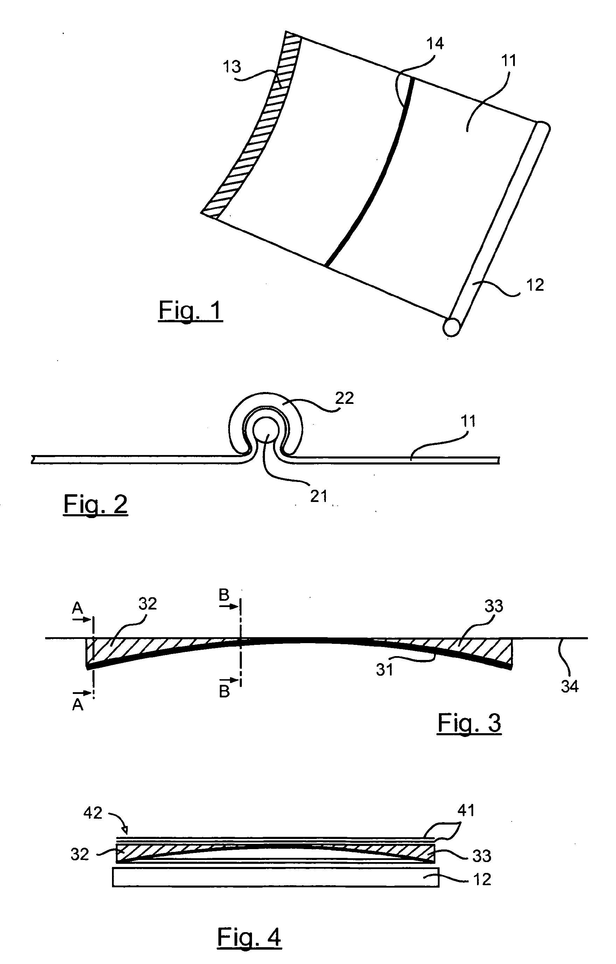

La figure 1 illustre schématiquement un tel store à enrouleur. La toile 11 est solidaire, à l'une de ses extrémités d'un tube à enrouleur 12, et à l'autre de ses extrémités d'une barre de tirage 13. le tube à enrouleur 12 est équipé d'un moyen de rappel, tendant à ramener la toile dans sa position repliée, c'est-à-dire enroulée sur le tube. Le déplacement de la toile, entraînée par la barre de tirage 13, peut être selon les cas, manuel ou motorisé.

Pour maintenir la toile dans la position galbée souhaitée, on a prévu une barre de maintien, ou baleine 14, solidarisée à la toile, selon toute technique adéquate : collage, soudage, couture... Selon une technique particulière, illustrée en figure 2, la baleine peut être en deux parties, la toile 11 circulant autour d'une tringle 21, sur laquelle peut se clipser ou se coller un élément de renfort 22 complémentaire pour former la baleine 14.

Plus précisément, la tringle 21, par exemple de section circulaire est logée à l'intérieur de la cavité définie à l'intérieur de l'élément de renfort 22 et immobilise ainsi la toile 11 par rapport à celui-ci tout en contribuant à tendre celle-ci. Elle contribue en outre également au maintien de la toile en position déployée et peut être réalisée en plastique ou en métal.

La tringle 21 peut notamment être glissée à l'intérieur de l'élément de renfort 22 ou clipsée à l'intérieur de celui-ci, auquel cas la portion de cylindre qu'il définit et son diamètre devront être choisis de façon que l'on puisse clipser la tringle aisément et qu'elle soit convenablement maintenue. On pourra également ajouter de la colle sur la partie supérieure de la tringle coïncidant avec l'ouverture de l'élément de renfort, de façon que la toile soit mieux immobilisée à l'intérieur de l'élément de renfort.

Les extrémités de la baleine 14 peuvent être, dans certains modes de réalisation, guidées dans des rails latéraux, de même que la barre de tirage 13.

On comprend que, lorsque la toile est repliée, la barre de maintien 14, du fait de son galbe, perturbe l'enroulement. En particulier, les tours de toile venant s'enrouler après que cette barre de maintien a été ramenée au niveau du tube à enrouleur (c'est-à-dire la partie de toile située entre la barre de tirage 13 et la barre 14) va présenter des plis, notamment au voisinage de ses bords latéraux.

Pour résoudre ce problème, l'invention propose d'équiper la barre de maintien 14 de moyens de compensation, visant à fournir une surface d'appui, pour la toile enroulée au-dessus de la barre de maintien, qui soit homogène, sur toute la largeur de la toile (c'est-à-dire la longueur du tube à enrouleur 12). Cette surface d'appui correspond donc à la surface d'une portion de cylindre, permettant d'assurer sensiblement une continuité de l'enroulement cylindrique de la toile.

Ceci est illustré par la vue en coupe de la figure 3, présentant une barre de maintien 31 équipée de moyens de compensation 32 et 33. Ces éléments de compensation 32 et 33, montés respectivement aux deux extrémités de la barre galbée 21, viennent combler un espace entre la barre 31 et un plan horizontal 34 tangent à la barre de maintien 31 en son milieu. En d'autres termes, les moyens de compensation 32 et 33 définissent une droite (dans le plan 34) parallèles à l'axe du tube à enrouleur.

Comme illustré schématiquement sur la figure 4, qui présente schématiquement, en coupe, la toile 11 enroulée sur le tube à enrouleur 12, on constate que, malgré la présence de la barre galbée 14, les tours de toiles 41 enroulés au-dessus de la barre 14 s'étendent de façon rectiligne, sans plis, du fait de la présence des éléments de compensation 32 et 33. On comprend que, en revanche, en l'absence de tels moyens de compensation, des plis apparaîtraient au bord 42 de la toile.

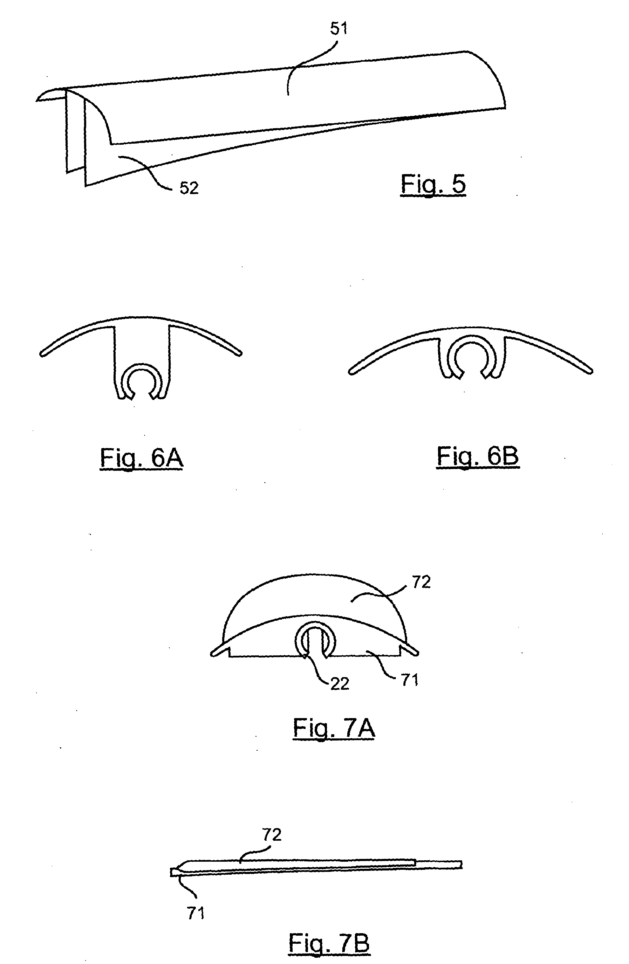

Un exemple d'élément de compensation est illustré en figure 5. Il comprend une portion de surface d'appui 51, arrondie, définissant une portion de surface de cylindre, et des moyens 52 de fixation à la barre de maintien 14. La surface 51 s'étend parallèlement à l'axe du tube à enrouleur 12, pour assurer la compensation de galbe.

Les moyens de fixation 52, qui permettent une solidarisation par exemple par collage ou par clipsage, présentent en revanche une hauteur variable, pour s'adapter au galbe de la barre de maintien 14, comme ceci est illustré par les deux vues de section des figures 6A et 6B correspondant respectivement :
- figure 6A : vue de section à l'extrémité de la barre (section AA de la figure 3) ;
- figure 6B : vue de section au voisinage du milieu de la barre (section BB de la figure 3).

Dans le mode de réalisation illustré par la figure 3, on prévoit deux pièces de compensation 32 et 33 symétriques. On peut bien sûr également prévoir une pièce unique, s'étendant sur toute la longueur de la barre de maintien, ou encore introduire un troisième élément d'épaisseur réduite sur la partie centrale de la barre de maintien.

Selon d'autres modes de réalisation, l'élément de compensation peut être réalisé en plusieurs parties.

Ainsi, dans le mode de réalisation des figures 7A et 7B, il comprend un premier élément 71 suivant le galbe de la barre 22, et un second élément 72 fixé sur le premier, par exemple par surmoulage, pour définir la surface d'appui selon l'invention. La longueur sur laquelle ce second élément 72 s'étend sur le premier élément 71 peut être fonction de la place disponible dans l'environnement.

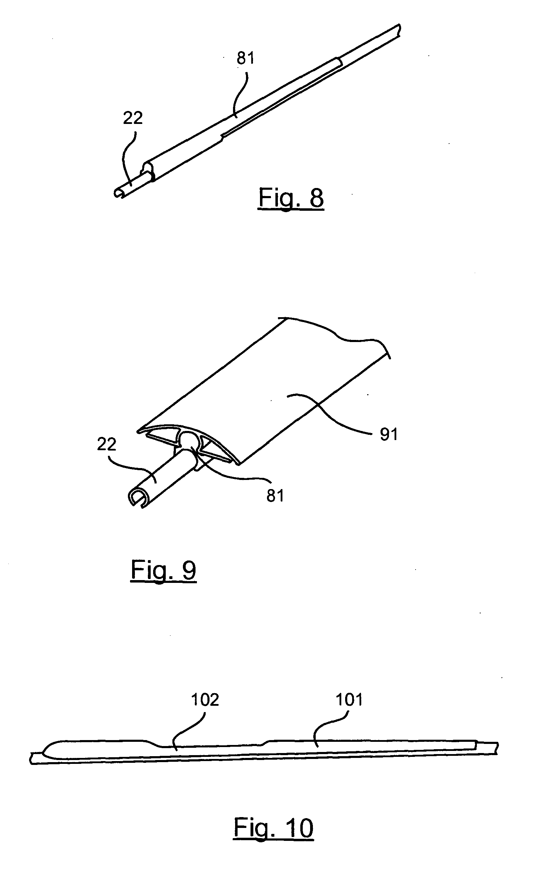

Dans un autre mode de réalisation, illustré par les figures 8 et 9, on place sur la barre 22 un élément intermédiaire 81, par exemple par collage ou clipsage. Cet élément intermédiaire 81 présente une hauteur variant le long de la barre de maintien, de façon à pouvoir recevoir une enveloppe d'appui 91 (figure 9) s'étendant de façon rectiligne. Ainsi, c'est l'élément intermédiaire 81 qui compense le galbe, et l'enveloppe 91 peut être une enveloppe utilisable également pour des baleines non galbées, s'étendant sur toute la largeur de la toile.

Par ailleurs, la surface de l'enveloppe peut être modifiée localement, sans perturber la fonction générale d'amélioration de l'enroulement. Ainsi, par exemple, sur l'élément de compensation 101 de la figure 10 (structurellement similaire à celui de la figure 7B), on a prévu une diminution locale 102 du profil, afin de permettre le passage d'un guide toile.

La technique de l'invention peut engendrer un déplaquage. Pour lutter contre celui-ci, on peut prévoir des moyens adaptés, placés à l'entrée du magasin, ou boîtier, du store, par exemple sous la forme d'une ou plusieurs brosses balayant la surface de la toile, préférentiellement sur toute sa largeur.

Selon différents modes de réalisation, les moyens de compensation peuvent être réalisés au moins partiellement dans un matériau souple compressible ou incompressible.

Les matériaux compressibles pouvant être utilisés sont en particulier les mousses comme les matériaux expansés de type polyuréthanne, polypropylène ou polystyrène par exemple.

Les matériaux souples, mais non (ou faiblement) compressibles, sont des matériaux déformables sous une contrainte, comme par exemple le caoutchouc, le TPE (Thermo Plastique Elastomère) ou l'EPDM (Ethylène Propylène Diène Monomère).

Dans l'exemple de la figure 1, on a représenté qu'une seule baleine, ou barre de maintien. On comprend qu'il est bien sûr possible de prévoir de la même façon plusieurs baleines, si ceci est nécessaire. Dans ce cas, elles peuvent être toutes équipées de façon identique, ou au contraire comprendre des éléments de compensation différents, par exemple en fonction de leur galbe propre et/ou de leur position dans l'enroulement.

## Revendications

1. Store à enrouleur pour véhicule automobile, comprenant une toile d'occultation (11) mobile entre au moins deux positions, une position repliée dans laquelle ladite toile (11) est enroulée autour d'au moins un tube à enrouleur (12), et une position déployée, dans laquelle ladite toile (11) est maintenue galbée par au moins une barre de maintien galbée (14, 31) s'étendant parallèlement audit tube à enrouleur (12),
**caractérisé en ce que** ladite barre de maintien galbée (14, 31), ou au moins une desdites barres de maintien galbée (14, 31), porte au moins un élément de compensation de galbe (32, 33, 101), présentant une section variable et s'étendant au moins sur une portion de ladite barre de maintien galbée (14, 31),
ladite section variable étant définie de façon à former une surface d'appui de ladite toile d'occultation (11) dans ladite position repliée s'étendant sensiblement parallèlement à l'axe dudit tube enrouleur (12).

2. Store à enrouleur selon la revendication 1, **caractérisé en ce que** chacun desdits éléments de compensation (32, 33 101) est clippé et/ou collé sur ladite barre de maintien galbée (14, 31).

3. Store à enrouleur selon la revendication 1, **caractérisé en ce que** chacun desdits éléments de compensation (32, 33, 101) est solidarisé à une pièce de liaison intermédiaire clippée et/ou collée sur ladite barre de maintien galbée (14, 31).

4. Store à enrouleur selon la revendication 1, **caractérisé en ce que** chacun desdits éléments de compensation (32, 33, 101) est surmoulé sur une pièce de liaison intermédiaire clippée et/ou collée sur ladite barre de maintien galbée (14, 31).

5. Store à enrouleur selon l'une quelconque des revendications 1 à 4, **caractérisé en ce que** chacune desdites barres de maintien galbées (14, 31) porte deux éléments de compensation (32, 33, 101) symétriques, associés respectivement à chaque extrémité de ladite barre de maintien galbée (14, 31).

6. Store à enrouleur selon l'une quelconque des revendications 1 à 4, **caractérisé en ce que** chacune desdites barres de maintien galbés (14, 31) porte un unique élément de compensation (32, 33, 101) s'étendant sensiblement sur toute la longueur de ladite barre de maintien galbée (14, 31).

7. Store à enrouleur selon l'une quelconque des revendications 1 à 6, **caractérisé en ce que** le ou lesdits éléments de compensation (32, 33, 101) sont réalisés en TPE.

8. Store à enrouleur selon l'une quelconque des revendications 1 à 7, **caractérisé en ce que** la surface d'au moins un desdits éléments de compensation (32, 33, 101) présente au moins une diminution locale.

9. Store à enrouleur selon l'une quelconque des revendications 1 à 8, **caractérisé en ce que** ledit tube à enrouleur (12) est logé dans un boîtier portant des moyens de déplaquage lissant ladite toile d'occultation (11) avant son enroulement sur ledit tube à enrouleur (12).

10. Store à enrouleur selon la revendication 9, **caractérisé en ce que** lesdits moyens de déplaquage comprennent au moins une brosse balayant la surface de ladite toile d'occultation (11).

11. Véhicule automobile comprenant un store à enrouleur, comprenant une toile d'occultation (11) mobile entre au moins deux positions, une position repliée dans laquelle ladite toile (11) est enroulée autour d'au moins un tube à enrouleur (12), et une position déployée, dans laquelle ladite toile (11) est maintenue galbée par au moins une barre de maintien galbée (14, 31), s'étendant parallèlement audit tube à enrouleur (12),
**caractérisé en ce que** ladite barre de maintien galbée (14, 31), ou au moins une desdites barres de maintien galbée (14, 31), porte au moins un élément de compensation de galbe (32, 33, 101), présentant une section variable et s'étendant au moins sur une portion de ladite barre de maintien galbée (14, 31),
ladite section variable étant définie de façon à former une surface d'appui de ladite toile d'occultation (11) dans ladite position repliée s'étendant sensiblement parallèlement à l'axe dudit tube enrouleur (12).

12. Véhicule automobile selon la revendication 11, **caractérisé en ce que** ledit store occulte, dans ladite position déployée, au moins une portion d'un pavillon vitré.

## Claims

1. Roller blind for a motor vehicle, comprising a screening cloth (11) which is movable between at least two positions, a wound-up position, in which the said cloth (11) is rolled up around at least one roller tube (12), and a deployed position, in which the said cloth (11) is held in a curved state by at least one curved holding bar (14, 31) which extends parallel to the said roller tube (12),
**characterised in that** the said curved holding bar (14, 31), or at least one of the said curved holding bars (14, 31), carries at least one curve-compensating element (32, 33, 101) which has a variable cross-section and extends at least over a portion of the said curved holding bar (14, 31),
the said variable cross-section being defined in such a way as to form a surface for supporting the said screening cloth (11) in the said wound-up position, which extends substantially parallel to the axis of the said roller tube (12).

2. Roller blind according to claim 1, **characterised in that** each of the said compensating elements (32, 33, 101) is clipped onto, and/or stuck to, the said curved holding bar (14, 31).

3. Roller blind according to claim 1, **characterised in that** each of the said compensating elements (32, 33, 101) is fastened to an intermediate linking piece which is clipped onto, and/or stuck to, the said curved holding bar (14, 31).

4. Roller blind according to claim 1, **characterised in that** each of the said compensating elements (32, 33, 101) is over-moulded onto an intermediate linking piece which is clipped onto, and/or stuck to, the said curved holding bar (14, 31).

5. Roller blind according to any of claims 1 to 4, **characterised in that** each of the said curved holding bars (14, 31) carries two symmetrical compensating elements (32, 33, 101) which are associated, respectively, with each end of the said curved holding bar (14, 31).

6. Roller blind according to any of claims 1 to 4, **characterised in that** each of the said curved holding bars (14, 31) carries a single compensating element (32, 33, 101) which extends substantially over the entire length of the said curved holding bar (14, 31).

7. Roller blind according to any of claims 1 to 6, **characterised in that** the said compensating element or elements (32, 33, 101) is/are made of TPE.

8. Roller blind according to any of claims 1 to 7, **characterised in that** the surface of at least one of the said compensating elements (32, 33, 101) has at least one local diminution.

9. Roller blind according to any of claims 1 to 8, **characterised in that** the said roller tube (12) is accommodated in a casing carrying stripping means which smooth out the said screening cloth (11) before it is rolled up onto the said roller tube (12).

10. Roller blind according to claim 9, **characterised in that** the said stripping means comprise at least one brush which sweeps the surface of the said screening cloth (11).

11. Motor vehicle comprising a roller blind comprising a screening cloth (11) which is movable between at least two positions, a wound-up position, in which the said cloth (11) is rolled up around at least one roller tube (12), and a deployed position, in which the said cloth (11) is held in a curved state by at least one curved holding bar (14, 31) which extends parallel to the said roller tube (12),
**characterised in that** the said curved holding bar (14, 31), or at least one of the said curved holding bars (14, 31), carries at least one curve-compensating element (32, 33, 101) which has a variable cross-section and extends at least over a portion of the said curved holding bar (14, 31),
the said variable cross-section being defined in such a way as to form a surface for supporting the said screening cloth (11) in the said wound-up position, which extends substantially parallel to the axis of the said roller tube (12).

12. Motor vehicle according to claim 11, **characterised in that**, in the deployed condition, the said blind screens at least a portion of a glazed roof.

## Patentansprüche

1. Rollo für ein Kraftfahrzeug mit einer Abdeckbahn (11), welche zwischen mindestens zwei Positionen beweglich ist, einer eingefahrenen Position, in welcher die Bahn (11) um mindestens ein Wickelrohr (12) gerollt ist, und einer ausgefahrenen Position, in welcher die Bahn (11) durch mindestens eine gewölbte Haltestange (14, 31), welche sich parallel zu dem Wickelrohr (12) erstreckt, gewölbt gehalten ist,
**dadurch gekennzeichnet, dass** die gewölbte Haltestange (14, 31) oder zumindest eine der gewölbten Haltestangen (14, 31) mindestens ein Wölbungs-Ausgleichselement (32, 33, 101) trägt, welches einen variablen Abschnitt aufweist und sich zumindest über einen Teil der gewölbten Haltestange (14, 31) erstreckt,
wobei der variable Abschnitt derart definiert ist, dass er eine Oberfläche zum Stützen der Abdeckbahn (11) in der eingefahrenen Position bildet, welche sich annähernd parallel zu der Achse des Wickelrohrs (12) erstreckt.

2. Rollo nach Anspruch 1, **dadurch gekennzeichnet, dass** jedes der Ausgleichselemente (32, 33, 101) auf die gewölbte Haltestange (14, 31) geklebt und/oder geclippt ist.

3. Rollo nach Anspruch 1, **dadurch gekennzeichnet, dass** jedes der Ausgleichselemente (32, 33, 101) an einem Zwischenverbindungsteil ausgebildet ist, welches auf die gewölbte Haltestange (14, 31) geklebt und/oder geclippt ist.

4. Rollo nach Anspruch 1, **dadurch gekennzeichnet, dass** jedes der Ausgleichselemente (32, 33, 101) auf ein Zwischenverbindungsteil aufgeformt ist, welches auf die gewölbte Haltestange (14, 31 ) geklebt und/oder geclippt ist.

5. Rollo nach einem der Ansprüche 1 bis 4, **dadurch gekennzeichnet, dass** jede der gewölbten Haltestangen (14, 31) zwei symmetrische Ausgleichselemente (32, 33, 101) trägt, welche jedem Ende der gewölbten Haltestange (14, 31) jeweils zugeordnet sind.

6. Rollo nach einem der Ansprüche 1 bis 4, **dadurch gekennzeichnet, dass** jede der gewölbten Haltestangen (14, 31) ein einziges Ausgleichselement (32, 33, 101) trägt, welches sich annähernd über die gesamte Länge der gewölbten Haltestange (14, 31) erstreckt.

7. Rollo nach einem der Ansprüche 1 bis 6, **dadurch gekennzeichnet, dass** das oder die Ausgleichselemente (32, 33, 101) aus TPE ausgeführt sind.

8. Rollo nach einem der Ansprüche 1 bis 7, **dadurch gekennzeichnet, dass** die Oberfläche zumindest eines der Ausgleichselemente (32, 33, 101) mindestens eine örtliche Verkleinerung aufweist.

9. Rollo nach einem der Ansprüche 1 bis 8, **dadurch gekennzeichnet, dass** das Wickelrohr (12) in einem Gehäuse untergebracht ist, welches Mittel zum Ausrichten trägt, welche die Abdeckbahn (11) vor dessen Aufrollen auf dem Wickelrohr (12) ebnen.

10. Rollo nach Anspruch 9, **dadurch gekennzeichnet, dass** die Mittel zum Ausrichten mindestens eine die Oberfläche der Abdeckbahn (11) streichende Bürste umfassen.

11. Kraftfahrzeug mit Rollo, mit einer Abdeckbahn (11), welche zwischen mindestens zwei Positionen beweglich ist, einer eingefahrenen Position, in welcher die Bahn (11) um mindestens ein Wickelrohr (12) gerollt ist, und einer ausgefahrenen Position, in welcher die Bahn (11) durch mindestens eine gewölbte Haltestange (14, 31), welche sich parallel zu dem Wickelrohr (12) erstreckt, gewölbt gehalten ist,
**dadurch gekennzeichnet, dass** die gewölbte Haltestange (14, 31) oder zumindest eine der gewölbten Haltestangen (14, 31) mindestens ein Wölbungs-Ausgleichselement (32, 33, 101) trägt, welches einen variablen Abschnitt aufweist und sich zumindest über einen Teil der gewölbten Haltestange (14, 31) erstreckt,
wobei der variable Abschnitt derart definiert ist, dass er eine Oberfläche zum Stützen der Abdeckbahn (11) in der eingefahrenen Position bildet, welche sich annähernd parallel zu der Achse des Wickelrohrs (12) erstreckt.

12. Kraftfahrzeug nach Anspruch 11, **dadurch gekennzeichnet, dass** das Rollo in der ausgefahrenen Position zumindest einen Teil eines Karosserieoberteils aus Glas abdeckt.
